(19)

Europäisches Patentamt
European Patent Office
Office européen des brevets

(11) **EP 3 399 481 A1**

(12) **EUROPEAN PATENT APPLICATION**

(43) Date of publication:
**07.11.2018 Bulletin 2018/45**

(51) Int Cl.:
***G06Q 10/08*** *(2012.01)*

(21) Application number: **18170320.8**

(22) Date of filing: **02.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.05.2017 IN 201711015483**
**18.08.2017 US 201715681088**
**14.02.2018 US 201815896921**

(71) Applicant: **UST Global (Singapore) Pte. Ltd.**
**Singapore 068809 (SG)**

(72) Inventors:
• **SEBASTIAN, Jaison Joseph**
**695034 Trivandrum, Kerala (IN)**
• **PILLAI, Kishor Radhakrishna**
**Austin, TX Texas 78717 (US)**

(74) Representative: **Guardian**
**IP Consulting I/S**
**Diplomvej, Building 381**
**2800 Kgs. Lyngby (DK)**

(54) **SYSTEM AND METHOD FOR ONE-TO-MANY AGGREGATION SYSTEM**

(57)    A system and method for configuring an aggregation system across an aggregated chain of nodes, called a route. The aggregated chain includes an aggregator, provider participants, receiver participants, and the destination participant. Aggregation points can be allocated between entities or participants in the aggregated chain, such that the aggregator is: (i) able to increase the volume of business through the aggregated chain, (ii) ensure there are no weak links (provider participants) in the aggregated chain, (iii) ensure higher utilization of the aggregator's resources, and (iv) reward participants for their loyalty to the aggregated chain.

**Description**

CROSS-REFERENCE TO RELATED APPLICATIONS

This application claims priority to U.S. Patent Application No. 15/896,921, filed February 14, 2018, U.S. Patent Application Serial No. 15/681,088, filed August 18, 2017, and Indian Patent Application Serial No. 201711015483, filed May 2, 2017, each of which are incorporated herein by reference in its entirety.

FIELD OF THE INVENTION

The present disclosure generally relates to computer-implemented systems and methods, and, more particularly, to a system and method for a one-to-many aggregation system to optimize utilization of resources in an aggregated chain.

BACKGROUND OF THE INVENTION

There is no currently incentive for shippers or movers of tangible assets from source to destination and end customers at the destination to be loyal to a transportation and logistics network. Linkages to the end customer are not taken into account, and each transaction is looked at in isolation. As a result of the lack of incentive and loyalty, underutilization of the network occurs, such as in the form of empty or partially filled containers moving across the network. These inefficiencies of resource allocation and utilization snowball into a disjointed, inefficient flow of assets or services throughout one or more transportation or service provider networks. Each participant or stakeholder in the network operates as a "silo" seeking to optimize only parameters immediately affecting the participant without having visibility across the entire network or any incentive to pursue opportunities or optimize inefficiencies elsewhere in the network through which the assets flow or services are provisioned.

SUMMARY OF THE INVENTION

Aspects of the present disclosure pertain to a system and method for configuring an aggregation system across an aggregated chain of nodes. The aggregated chain includes the aggregator, the provider participants (service providers), the receiver participants (service consumers) who provide services/goods to a destination participant (e.g., the end customer), and the destination participant (end customer). The aggregated chain of nodes, the end customer, and the receiver participants are organized in a hierarchy, which is serviced by a set of service providers who are authorized by the aggregator. The aggregator can transfer aggregation points to a pool, from where it gets transferred to the provider participants based on an extent of service they commit to the aggregator. The provider participants can transfer some of their points to the receiver participants, every time they give business to the provider participant. The aggregator can also directly transfer aggregation points to the receiver participant. This can be moderated by network coverage factor, seasonal factors, and industry-specific factors. The destination participant or end customer also gains aggregation points commensurate with the loyalty of the receiver participant to the aggregated chain. The provider participants will be rewarded based on the number of aggregation points they have transferred to the receiver participants. The receiver participants and the destination participant (end customer) will be rewarded based on the number of aggregation points they have collected. The aggregator benefits from the fact that the nodes in the chain will have a higher utilization given the incentive for the provider participants, receiver participants, and the destination participant alike to the aggregated chain.

The receiver participants in a hierarchy are categorized into clusters based on the number of aggregation points they have collected. They can be provided customized services, in which the receiver participants in the cluster having the highest number of aggregation points will get the most preferred status and most favorable services.

Aspects of the present disclosure will help the computer to continuously monitor the utilization of the service providers at a node level, to identify the provider participants who have a higher probability of underutilization based on past transaction history and will automatically deallocate underperforming provider participants from the hierarchy. This ensures that there are no underperforming provider participants in the aggregated chain. The system also provides a network utilization dashboard that brings together all the entities in a single display such that the aggregator can identify inefficiencies and focus on areas for improvement. The system of nodes is configured such that it can be used by the aggregator and the destination participant or end customer to solve specific pain-points in their respective domains.

Every industry is increasingly getting digitally connected, which means stakeholders who can aggregate across industries are in a position to generate more value versus those who are focused on a particular industry or on a segment within an industry. To leverage the power of aggregation, it is important that the aggregator is able to keep all participants committed or loyal to the aggregated chain.

The aggregated chain essentially includes a series of nodes wherein the aggregator will authorize provider participants to provide services on their behalf using assets that the aggregator has either at its disposal or will make available. The services are then availed by receiver participants who eventually provide services to the destination participant. One instance, by way of example only and not limiting, of the service can be a tangible item or service item being moved or conveyed from one node to another, by the provider participant for the receiver participant and eventually reaches the destination participant. Another instance, by way of example only and not limiting, can involve a case where the value of the item being moved or conveyed is enhanced by the provider participant or the receiver participant at specific nodes in the chain. In order to have all participants committed to the chain, the aggregator will issue aggregation points to the provider participant, which gets transacted with the receiver participants. The aggregator will also issue aggregation points directly to the destination participant and to the receiver participant. The specific nature of the instance will have a bearing on the number of aggregation points that are allocated to the provider participant, receiver participant, and destination participant.

Advantages of the present disclosure include:

The aggregator (e.g., shipping line) can identify weak links in the transportation and logistics (T&L) network;

Provide packages to receiver participants (e.g., shippers) based on intelligent clustering around aggregation points, routes, and end customers;

The aggregator gains loyalty not just from shippers, but from end customers as well;

Reduces empty containers in the T&L network;

Machine-learning-based (ML-based) self-optimization of provide participants (eg., freight forwarders) in the aggregated chain;

A dashboard graphical user interface that helps the aggregator (e.g., shipping line) optimize the T&L network.

## BRIEF DESCRIPTION OF THE DRAWINGS

FIG. 1 is a functional block diagram of an example of a one-to-many hierarchy in an aggregated chain, showing clustering of receiver participants in an aggregated chain.

FIG. 2 illustrates ways that aggregation points can be allocated and transferred among entities or participants in the aggregated chain, such as the one shown in FIG. 1.

FIG. 3 is a functional block diagram illustrating an example of deallocation of a provider participant.

FIG. 4 is a functional block diagram illustrating how the aspects of the present disclosure produce higher utilization of available resources.

FIG. 5 are graphical user interfaces showing a dashboard for an example end-to-end T&L network for a given end customer and route.

FIG. 6 is a functional block diagram showing example computer systems, databases, and networks for implementing aspects of the present disclosure.

FIG. 7 is a graphical user interface showing a network utilization block board according to an aspect of the present disclosure.

## DETAILED DESCRIPTION

Major components of the present disclosure include: (i) a hierarchy, (ii) a method of allocating aggregation points to the entities or participants in the hierarchy, (iii) an algorithm that automatically deallocates provider participants who are underutilized to ensure there are no weak links in the aggregated chain, (iv) a method to increase the utilization of resources owned by the aggregator, and (v) a network utilization dashboard that helps the aggregator to identify visually the focus areas to improve the volume of items transacted through the aggregated chain. An aggregated chain includes all the participants from source to destination and all intermediaries in between along a route, "aggregated" together to form a chain of nodes, organized into one or more hierarchies.

While the present disclosure is not so limited, examples in this disclosure may refer to the shipping and transportation domain. Rather, the present disclosure can be applied to any domain in which tangible assets or services that utilize tangible assets flow from a source to a destination through various intermediate participants in a route. A tangible asset can be a good as that term is understood in the transportation and logistics context. A service can be a human-provided service that uses a tangible asset. For example, a service can include the provisioning of healthcare to a human patient using medical devices, in which entities from retail, healthcare, and other domains collaborate.

**Example Hierarchy**

On a particular route there are a number of receiver participants (also called service consumers), each of whom is associated with a destination participant (also called an end customer). The aggregated chain is organized based on this relationship, referred to as a hierarchy. There can be multiple hierarchies in the aggregated chain. Provider participants who represent the aggregator provide services to the receiver participants in each of the hierarchies. Participants generally refer to entities involved in a transportation and logistics network or a service provider network that provide or receive the tangible assets or services flowing through the network from a source to a final destination via multiple intermediaries along a route that defines points from source to destination where the tangible assets or services are transferred from or handed off to one participant to another in the network. When the transportation and logistics network involves a shipping line, for example, the participants can include shippers, freight forwarders, and the end customer that finally receives the tangible assets transported through the network by shippers and freight forwarders. A network can include computers, data stores, communication links, and tangible transportation devices involved in transporting tangible assets along a route from source to destination facilitated by intermediaries that transfer the tangible assets from one participant in the work to the next. When services are provided using tangible assets, the network can include computers, data stores, communication links, and service entities involved in the provisioning of services along a service route using multiple service providers to finally provide the services to the destination participant. For example, in the healthcare context, the destination participant can be a human patient who consumes medical services provided by one or more healthcare service providers, such as hospitals, diagnostic and testing labs, imaging facilities, tele-health centers, retailers that sell wellness products, and the like.

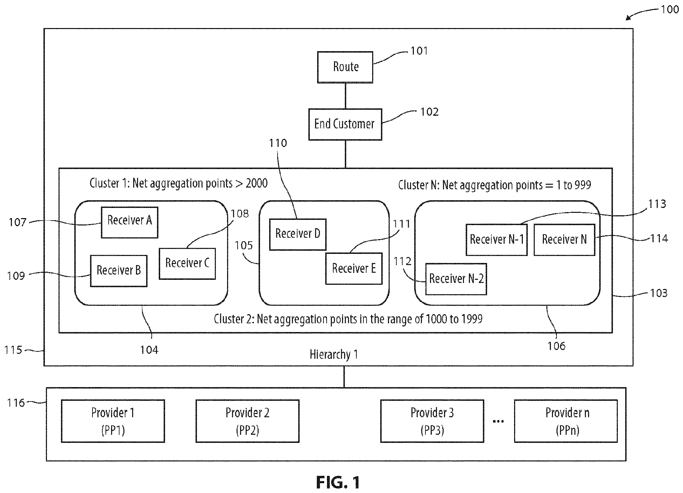

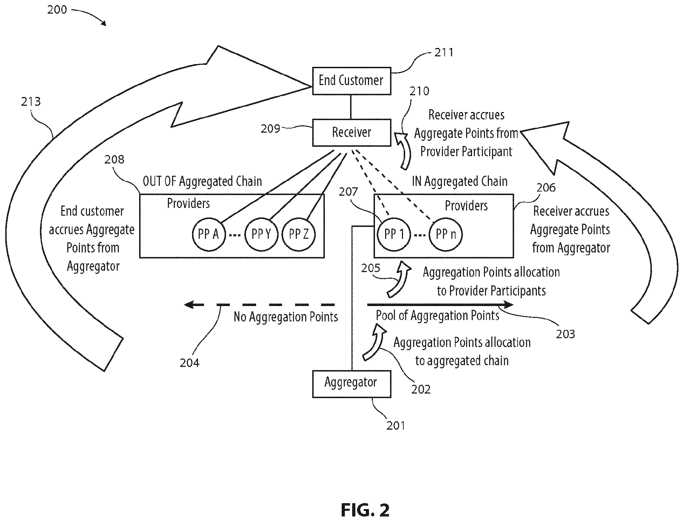

In FIG.1, at the topmost level of a hierarchy labeled "Hierarchy 1" 115 is a Route 101. At the next level of the hierarchy 115 is the destination participant, labeled "End Customer" 102 in the hierarchy 115, where the tangible assets or services transported or provisioned through the network are ultimately delivered or provided. At the next level of the hierarchy 115 are receiver clusters or groups 104, 105, 106. Each cluster 104, 105, 106 is based on the aggregation points that the receiver participant will accrue from the provider participants 116 in the hierarchy 115, and the aggregation points the receiver participant will accrue from the aggregator 201 (shown in FIG. 2), for the particular hierarchy 115.

FIG. 1 shows, for example, provider participants (which in the transportation and logistics network can be freight forwarders) 116 including PP1, PP2, PP3, thru PPn associated to Hierarchy 1 (115). It should be noted that the provider participants are not part of the hierarchy 115, but rather are associated to it as shown by the link between the provider participants 116 and the hierarch 115 in FIG. 1. The hierarchy 115 together with the aggregation points provides a way to build or construct clusters 104, 105, 106 of receiver participants (A...N) against which the aggregator 201 can provision favorable shipment or service-provisioning plans. An example of these receiver clusters is explained next.

An end customer or destination participant can have multiple receiver participants (A...N) associated with the destination participant on a particular route 101. Each of the shippers can accrue aggregation points. The receiver participants (A...N) having aggregation points within predefined or predetermined ranges are categorized into specific receiver clusters 104, 105, 106.

FIG. 1 shows the following example clusters of receiver participants (called receivers):
Receiver A (107), Receiver B (108) and Receiver C (109) who have net aggregation points greater than 2000 are grouped under Cluster 1 (104).

Receiver D (110) and Receiver E (111) who have net aggregation points between 1000 and 2000 are grouped under Cluster 2 (105).

Receiver N (114), Receiver N-1 (113), and Receiver N-2 (112) who have net aggregation points between 1 and 999 under Cluster N (106).

The number of aggregation points in the examples above are arbitrary, and the present disclosure contemplates any ranges of aggregation points, which can be adjusted or determined by the aggregator 201 from time to time, that will aid the aggregator 201 in optimizing the utilization of resources across the aggregated chain.

There can be any number of hierarchies, not just one as shown in FIG. 1, each having a specific route, destination participant, and receiver clusters. Each receiver participant in a receiver (e.g., shipper) cluster has a customized shipment (or service-provisioning) plan provisioned by the aggregator 201. The receiver cluster having the maximum aggregation points range will have a preferred status and will receive the most favorable shipment plans. The concept of aggregation points-based receiver clusters 104, 105, 106 in a hierarchy 115 helps the computer system to identify and select the most advantageous shippers, so that the aggregator 201 can provide preferential treatment to those receiver participants in the aggregation network 100.

**Aggregation Points Allocation**

Referring to FIG. 2, the aggregator 201 will allocate aggregation points to the provider participants based on a volume of service (e.g., volume of tangible assets to be transported across the route) they will commit to the aggregator 201. Every time the provider participant provides a service to the receiver participant between two nodes in a particular hierarchy 115, aggregation points are transferred from the provider participant 206 to the receiver participant 209. A node is a point in the network where a tangible asset is picked up from, for example, a service consumer (Source node) and delivered to an end customer (destination node), or where the tangible asset is physically transported from one service provider to another (intermediate node). The attributes of a node include the route, an identity of the end customer, a place, and a location of the tangible asset, such as in a port or inland. The number of aggregation points gained by the receiver participants depends on the volume of tangible assets and the type of tangible asset being transported or services being provisioned plus a series of node-level optimization factors specific to the mode of transport (e.g., ship, truck, drone) or service modality. The node-level optimization factors can be determined by the aggregator 201 based on the extent to which the aggregator 201 wants to incentivize the receiver participants 103 to increase the volume of business between the two nodes using a particular mode of transport. The aggregator 201 can also allocate aggregation points directly to the receiver participants 103 based on transported volume and a set of node-level optimization factors specific to the route 101. These node-level optimization factors are decided by the aggregator 201 based on the extent to which the aggregator 201 wants to incentivize the receiver participants to increase the volume of goods or services between the nodes in the route 101. The destination participant 102 also gains aggregation points from the aggregator 201. The number of aggregation points earned by a destination participant 102 can be a percentage of the aggregation points gained by the receiver participants 107...114 associated with the destination participant 102 in a particular hierarchy 115. The aggregation points are tracked real time in an electronic distributed ledger (such as known in the distributed database blockchain context), wherein all transactions of aggregation points 202, 205, 210, 212, 213 are fully visible to the aggregator 201. The provider participant has visibility to the transactions involving aggregations points 205 allocated to the provider participant or aggregations points 210 allocated by the provider participant to receiver participants, the receiver participant has visibility to the transactions involving aggregations points allocated to the receiver participant 210, 212, and the destination participant has visibility to the transactions involving aggregations points 210, 213 allocated to the destination participant and the aggregation points allocated to their receiver participant 210, 212.

The aggregator 201 can allocate aggregation points 202 to a pool of aggregation points 203. Every provider participant (e.g., freight forwarder) 206 who wants to be part of the aggregator's network called the aggregated chain (e.g., a transportation and logistics (T&L) network), will be given aggregation points 205 in proportion to or commensurate with the volume of cargo (by cargo type) or volume of service that they will commit to the aggregated chain, for example every month and not limiting, across hierarchies, including the hierarchy 115.

The number of points given, which is designated herein as "GAgP(A,F,H)" where:

'A' denotes the aggregator 201,
'F' denotes the provider participant (e.g., Freight Forwarder)
'H' denotes the hierarchy 115.

The corresponding number of aggregation points, GAgP(A,F,H) is reduced from the pool of aggregation points 203 owned by the aggregator 201. In the shipping context, a mapping between the TEU and aggregation points will be decided by the aggregator 201, by way of example and not limiting, after taking into account the route 101, the source and destination nodes, the destination participant, the overall trade in the specific route 101, the shipping line's (aggregator) current market share, and the target market share.

Every time a receiver participant 209, such as a shipper, associated with a specific end customer 211 ships items through the provider participant 207, such as a freight forwarder, that receiver participant 209 accrues aggregation points 210.

The number of accrued points, which is designated herein as "AgP(F,S,H)" is based on Algorithm2 described in more detail below, where:

'F' denotes the provider participant (e.g., freight forwarder 207)
'S' denotes the receiver participant, e.g., a shipper
'H' denotes the hierarchy 115.

The provider participant (freight forwarder) 207 in turn loses the corresponding number of aggregation points awarded to the receiver participant 209 above. The receiver participant 209 can also accrue additional aggregation points 212 from the aggregator 201 directly.

The number of directly awarded points, designated herein as "AgP(A,S,H), is based on Algorithm1 described in more detail below, where:

'A' denotes the aggregator 201,
'S' denotes the receiver participant (e.g., shipper)

'H' denotes the hierarchy 115.

The corresponding number of aggregation points is reduced from the pool of aggregation points 203 owned by the aggregator 201.

The total number of aggregations points accrued by the receiver participant for a specific hierarchy 115 is given by:

AgP (S,H) = AgP(F,S,H) + AgP(A,S,H)

A percentage of the aggregation points 213 allocated to the shippers, accrue to the end customer (211). This number of points, designated herein as "AgP (A,C,H), where:

'A' denotes the aggregator 201,
'C' denotes the end customer,
'H' denotes the hierarchy.

The corresponding number of aggregation points is reduced from the pool of aggregation points 203 owned by the aggregator 201.

Likewise every time a receiver participant does not use the aggregated chain 100 between nodes in a particular network, that receiver participant loses the opportunity to gain aggregation points (indicated by 204), and consequently so does the end customer 211. Essentially what is produced is an end-to-end integrated demand-supply chain where every stakeholder benefits only if they are loyal to each other in a set of one-to-many relationships between every node in the aggregated chain.

## Algorithm1 - Example algorithm for allocation of Aggregation Points

An example algorithm (Algorithm1) that governs the various allocation of aggregation points is outlined below. Algorithm1 has three components (i) a provider participant (e.g., freight forwarder) Usage Factor (FUF), (ii) an Aggregator 201 to Receiver (e.g., shipper) award calculation, and (iii) a provider participant (e.g., freight forwarder) to receiver participant (e.g., shipper) award calculation.

## Provider Participant (e.g., Freight Forwarder) Usage Factor (FUF)

Every time a provider participant's service is utilized by a receiver participant, between two nodes in the route 101 in a specific hierarchy 115, the FUF value for the provider participant is set to 1. The FUF value for all other provider participants who are associated with the two nodes in the hierarchy 115 but do not carry any tangible assets or provide any services for the particular receiver participant, is set to 0.

## Aggregator to Receiver (e..g, Shipper) Award Computation

The algorithm for allocating aggregation points from the pool of aggregation points 203 to a receiver participant in a specific hierarchy 115 is governed by a set of node-level optimization factors specific to a route 101 in a hierarchy 115.

The node-level optimization factors include (using shipping as an example):

Route coverage factor: Covers for the route specifics. In routes having low utilization, the weightage of tangible assets or volume of services can be increased.

Seasonal factor: accounts for the crests and troughs in the volume of tangible assets (e.g., cargo) or service provided through the year.

Forward and reverse leg factor: accounts for the significant difference in container utilization in the forward and reverse leg. For example, for a particular arterial route, such as Far East - North America, the reverse leg (North America - Far East) can have lower volumes when compared to the forward leg (Far East - North America).

Liner owner (aggregator) port usage factor: Certain shipping lines (e.g., aggregators) have Terminal Operating companies, in which case they will focus on volumes through the port that their Terminal Operating Company operates. This factor helps incentivize receiver participants (shippers) and provider participants (freight forwarders) to avail the services of terminals owned or controlled by the shipping line (aggregator).

The aggregator 201 will assign a weightage for each of the above factors at a route level in a specific hierarchy. To ensure the aggregator 201 has control at a node level, the aggregator 201 can assign a load factor for each of the above node-level optimization factors at a node level. The value of the factor at a node level can be arrived at by multiplying the weightage value (at a route level) with the load factor (at a node level).

The example pseudo code given below has the following notations:

"X" denotes a node in the route 101 as per the shipment or routing plan;
"P" denotes a weightage associated with a Route Coverage Factor;
"Q" denotes a load factor associated with a Route Coverage Factor;
"R" denotes a weightage associated with a Seasonal Factor;
"S" denotes a load factor associated with a Seasonal Factor;
"T" denotes a weightage associated with a Forward/Reverse Leg Factor;
"U" denotes a load factor associated with a Forward/Reverse Leg Factor;
"V" denotes a weightage associated with an Aggregator Port Usage Factor;
"W" denotes a load factor associated with an Aggregator Port Usage Factor.

GAgP(A,S,H) refers to the number of aggregation points the receiver participant would receive before applying the node-level optimizations factors.

Example pseudocode logic is:

```
INTIALIZE AgP (A, S, H) = 0
BEGIN FOR X = 1 to N - 1
Route Coverage Factor (A, S, H) [X, X+1] = P* [Q (1, 2) + Q (2,3] +...+ Q (N-1,
N)]
Seasonal Factor (A, S, H) [X, X+1] = R * [S (1, 2) + S (2, 3 ) +...+ S (N-1, N)]
Forward/Reverse Leg Factor (A, S, H) [X, X+1] = T * [U (1, 2) + U (2, 3) +...+ U
(N-1, N)]
Aggregator Port Usage Factor (A, S, H) [X, X+1] = V * [W (1, 2) + W (2, 3) +...+
W (N-1, N)]
AgP (A, S, H) [X, X+1] = GAgP (A, S, H)* (Route Coverage Factor (A,S,H)
[X,X,+1]+ Seasonal Factor (A,S,H) [X,X+1] + Forward Leg Factor (A,S,H) [X,X+1]+
Reverse Leg Factor (A,S,H) [X,X+1]+ Aggregator owned port usage factor (A,S,H) [X,X+1])
INCREMENT AgP (A, S, H) = AgP (A, S, H) + AgP (A, S, H) [X, X+1]
END
```

According to another aspect, GAgP(A,S,H) [X,X+1] refers to the number of aggregation points the receiver participant would receive before applying the route and node-level optimizations factors.

Example pseudocode logic is:

```
INTIALIZE AgP (A, S, H) = 0
BEGIN FOR X = 1 to N - 1
Aggregation Factor (A, S, H) [X, X+1] = P* [Q (X, X+1)] + R* [S (X, X+1)] + T*
[U (X, X+1)] + V* [W (X, X+1)]
AgP (A, S, H) [X, X+1] = GAgP(A,S,H) [X,X+1] * Aggregation Factor (A, S, H)
[X, X+1]
INCREMENT AgP (A, S, H) = AgP (A, S, H) + AgP (A, S, H) [X, X+1]
END
```

### Example Provider Participant to Receiver Participant Award Computation

An example algorithm for allocating aggregation points from the provider participant to the receiver participant in a specific hierarchy 115 can be governed by an intermodal optimization factor. This intermodal optimization factor allows the aggregator 201 to incentivize the receiver participant at a node level in the hierarchy 115, based on the mode of transport or modality of service. The mode of transport, by way of example and not limiting, in the context of a T&L network can be Sea, Rail, Road, Air, Drone and Inland water way.

The aggregator 201 assigns a weightage for the intermodal optimization factor at a route level in a specific hierarchy 115. To allow control at a node level, the aggregator 201 also assigns a load factor for intermodal optimization at a node level. The value of the factor at a node level is arrived at by multiplying the weightage value (at a route level) with the load factor (at a node level).

Example pseudo code given below has the following notations:

"X" denotes a node in the route as per the shipment plan;
"P" denotes a weightage associated with an Intermodal Rail Factor;
"Q" denotes a load factor associated with an Intermodal Rail Factor;
"R" denotes a weightage associated with an Intermodal Road Factor;

"S" denotes a load factor associated with an Intermodal Road Factor;
"T" denotes a weightage associated with an Intermodal Sea Factor;
"U" denotes a load factor associated with an Intermodal Sea Factor.

"GAgPRail" denotes the number of aggregation points the provider participant would receive before applying the route and node-level optimizations factors, based on the cargo carried by the rail network between two nodes.
"GAgP_Road" denotes the number of aggregation points the provider participant would receive before applying the route and node-level optimizations factors, based on the cargo carried by the road network between two nodes.
"GAgP_Sea" denotes the number of aggregation points the provider participant would receive before applying the route and node-level optimizations factors, based on the cargo carried by the sea network between two nodes.
Example pseudocode logic is:

```
SUBLOCK: FUF_Subblock (F, X, X+1)
INITIALIZE AgP (F, S, H) = 0
BEGIN FOR X = 1 to N - 1
IF FUF_Subblock (F, X, X+1) = 1
THEN
Intermodal Rail Factor (F, S, H) [X, X+1] = P* Q (X, X+1)
Intermodal Road Factor (F, S, H) [X, X+1] = R * S (X, X+1)
Intermodal Sea Factor (F, S, H) [X, X+1] = T * U (X, X+1)
AgP (F, S, H) [X, X+1] = (GAgP_Rail (F, S, H) [X, X+1] * Intermodal Rail
Factor (F,S,H)) [X,X,+1]+ (GAgP_Road (FA, S, H) [X, X+1] * Intermodal Road Factor
(F,S,H) [X,X+=1]) + (GAgP_Sea (F, S, H) [X, X+1] * Intermodal Sea Factor (F,S,H)
[X,X+1])
ELSE
AgP (F, S, H) [X, X+1] = 0
INCREMENT AgP (F, S, H) = AgP (F, S, H) + AgP (F, S, H) [X, X+1]
END
```

The net aggregation points for the shipper will be the sum of the awards:

$$\text{AgP}\,(S, H) = \text{AgP}\,(F, S, H) + \text{AgP}\,(A, S, H)$$

The net aggregation points for the end customer will be:

$$\text{AgP}\,(A, C, H) = \text{End customer accrual \%} * \text{AgP}\,(S, H)$$

## Algorithm2 - Automatic deallocation of underperforming provider participant

An aspect of the present disclosure involves a second algorithm referred to as Algorithm2 that automatically identifies and deallocates underutilized provider participants associated to a particular hierarchy 115 (and thereby a particular route 101), and automatically transfers any aggregation points remaining with the specific underperforming provider participant back to the aggregator 201.
Based on the FUF and the number of aggregation points allocated to receiver participants by the provider participant, the Router Service Factor (RSF) is arrived at for each provider participant using the example calculation RSF = (P/(P+Q)) *S where the designated factors are:

"P" denotes the number of instances where FUF equals 1 for a particular hierarchy for the particular provider participant;
"Q" denotes the number of instances where FUF equals 0 for a particular hierarchy for the particular provider participant;
"S" denotes the number of aggregation points allocated by the provider participants (e.g., freight forwarders) to the receiver participants (e.g., shippers) in the hierarchy 115.

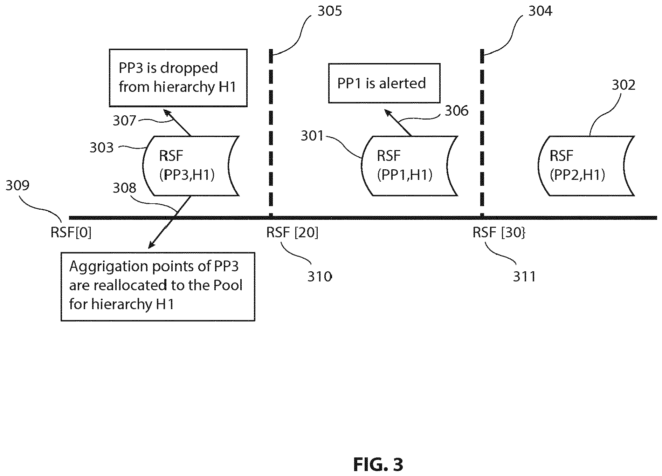

Referring to FIG. 3, the aggregator 201 defines an alert limit (304) and threshold limit (305) for the range of RSF values held by the Provider Participants in any particular hierarchy in the aggregated chain. If the RSF value falls below the alert limit setting (311) an alert is automatically sent (306) to that Provider Participant indicating that the Provider Participant stands at risk of being deallocated from the hierarchy 115, once that Provider Participant's RSF value reaches or falls below threshold limit. If the RSF reaches or falls below the threshold limit (310), then the Provider Participant is automatically deallocated (307) from the aggregated chain and its corresponding association with the hierarchy 115 and the aggregation points retained by that Provider Participant is allocated back to the pool of aggregation points 203 (308). This deallocation feature helps the computer system to automatically identify and remove provider participants who are the weak links in the aggregated chain, and the aggregator 201 can then bring in a provider participant to replace the dropped provider participants associated with the particular hierarchy.

FIG. 3 includes an example set of Provider Participants identified as PP1 (301), PP2 (302), PP3 (303), associated under an example hierarchy designated by HI, such as the hierarchy 115 shown in FIG. 1. In this example:

PP1 (301) has a RSF value below the alert limit setting (311) and an alert is automatically sent (306) to that PP1;
PP3 (303) has a RSF value below the threshold limit setting (310) and is automatically deallocated (307) from the aggregated chain and its association with hierarchy HI;
PP2 has the RSF value above the alert limit and remains in good standing in the particular hierarchy H1.

**Resource utilization optimization**

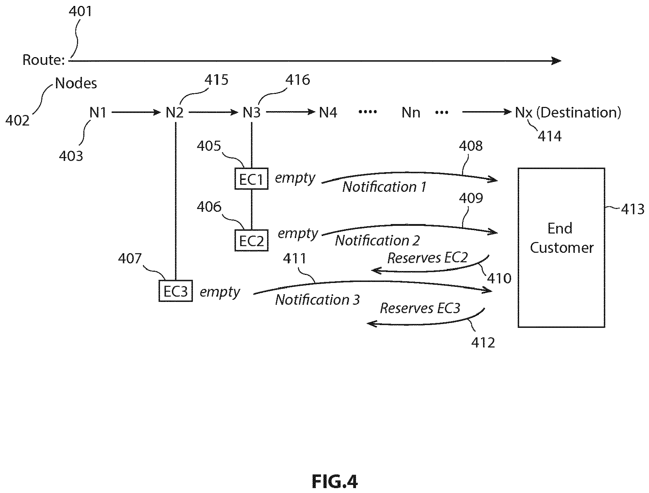

Referring to FIG. 4, three example containers are shown as empty, namely EC1 (405), EC2 (406) at node N3 (416), and EC3 (407) at node N2 (415). In the example shown, the route 401 is portrayed as being composed of nodes N1 (403) through Nx (414). Other non-empty containers are not shown in the diagram. Notification messages are provided to the destination participant (End Customer) 413 of the container availability. According to an aspect of the present disclosure, a load factor (for the specific nodes between which the empty container is bought out and moved) associated with the Route Coverage factor may be increased to award higher aggregation points (for the use of that container) to a receiver participant or to the destination participant. In the diagram, the destination participant 413 declines or ignores the offer in Notification1 (408), but is shown accepting the offer in Notification2 (409) by reserving the EC2 container at Node N3 (416), and accepting the offer in Notification3 (411) by reserving the EC3 container at Node N3 (415). As a consequence of the raised load factor associated with the Route Coverage factor, the destination participant (413) will receive a greater point award and thereby have greater incentive for using containers EC2 (406) and EC3 (407) for a cargo shipment. The receiver participants who move their assets into the empty containers EC2 and EC3 will also benefit from a greater number of aggregation points.

Another aspect of the present disclosure is the messaging between entities in the system so as to notify availability of aggregator's resources at specific nodes to the destination participant; such that the destination participant can utilize the resources and get additional aggregation points, which are provided by the aggregator 201 by way of adjusting the optimization factors specific to the nodes.

**Trading Aggregation Points**

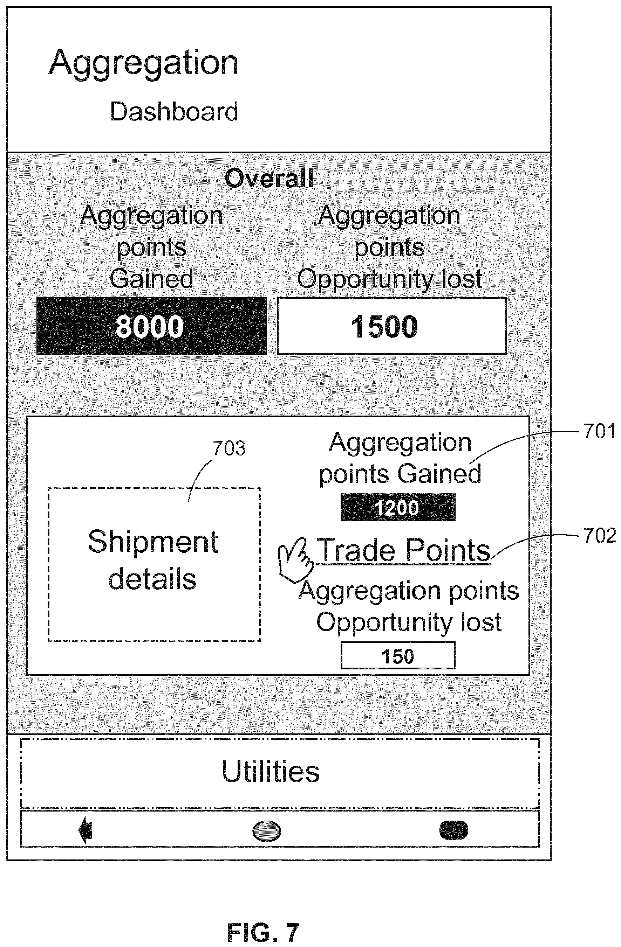

FIG. 7 illustrates a graphical user interface portrayed to a receiver participant, which shows an example network utilization block board according to an aspect of the present disclosure.

The receiver participant has the ability to trade the aggregation points gained (701). In this example shown, the receiver participant has 1200 aggregation points. The aggregator 201 has the flexibility to decide on how the aggregation points can be traded (702). For example, the aggregator 201 can decide that aggregation points can be traded for preferential services. For example, the receiver participant and the end customer can trade the aggregation points gained in a particular hierarchy for preferential services in the same hierarchy.

The aggregator 201 can define the rules that govern the trading of aggregation points. For example, the aggregation points gained on a shipment hierarchy can only be traded in association with a shipment (703) in the same hierarchy.

**Network Utilization Block Board**

The present disclosure also discloses a method and design of a network utilization dashboard that brings together all the entities in a single display screen such that the aggregator 201 can identify inefficiencies/focus on areas for improvement across the entire aggregation chain including end customers, service consumers, service providers, and geographic routes or regions.

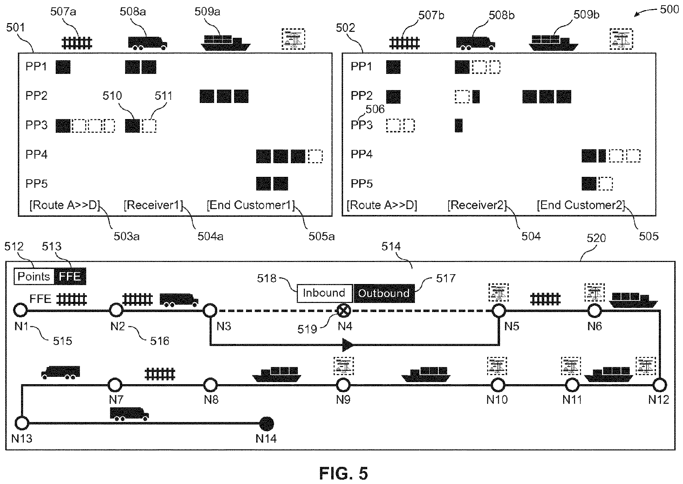

Referring to FIG. 5, an example dashboard 500, represented on a display screen or portion thereof as a graphical user interface, provides a concise picture of the cargo that moves through the T&L network--by mode of transport, by freight forwarders, and shippers for any End Customer. The graphical user interface 500 includes a block board 520 linked to a network layout of the T&L network, which allows the user to select specific nodes (N1...N14) in the network and look at, for example, the contribution of provider and receiver participants at a node level for a particular route for a specific end customer, so as to enable the aggregator 201 to make decisions such as identifying those of the provider participants which are weak links in the T&L network, identifying those of the receiver participants which have the opportunity to give more business to the T&L network, or identifying the nodes (N1...N14) where the T&L network needs to be strengthened. Similarly, any aggregated process can be converted into a series of nodes in a network, and the graphical user interface can be connected to the block board 520 to dissect the aggregated process.

The dashboard 500 depicts utilization as shaded units (510) carried by the T&L network or unshaded units, (511) which were not carried by the particular T&L network. The size of the shaded or unshaded units can be proportional to the aggregation points gained or opportunity lost to contribute. In the network layout dashboard 520, the user can flip between two views: (1) based on aggregation points (512) or (2) FFE (Forty Foot Equivalent) carried on the specific mode of transport (513).

The example dashboards 501, 502 includes icons representing RAIL (507a, 507b), TRUCK (508a, 508b), and SEA (509a, 509b) utilization for a given route labeled as "Route A»D" 503a, a receiver participant designated Receiver 1 504a, and the end customer designated End Customer1 505a. Included in the dashboard 500 is an example side-by-side comparison 502 for the same route (Route A»D) and a second end customer (End Customer2), using a second receiver designated as Receiver2 504b. Rectangles displayed in dotted or dashed lines indicate a loss of opportunity to gain aggregation points.

The example network layout (514) allows the user to select specific nodes (515,516) in the aggregated network, so as to view the corresponding Block Board and analyze not limiting to which provider participant is strong/weak between specific nodes, and make decisions with regard to the T&L network optimization. Similarly, an aggregated process can be converted into series of connected nodes in a network and use the network layout to dissect the aggregated process.

The example network layout (514) allows the user to select between outbound (517) and inbound (518) shipment cycle to view the corresponding Block Board.

The node (519) depicts a node that is not serviced by the aggregator's T&L network.

After analyzing the network utilization by the shippers, the aggregator 201 can take various enhancing actions, given as examples and not limiting, to optimize their T&L network to yield more returns:

Aggregator 201 to provide preferential shipment plans to Receiver2 and work with Receiver1 to see what can be done to increase utilization of the T&L network;
Aggregator 201 can scrutinize Provider Participant PP3 506;
Aggregator 201 can evaluate the Rail transport utilization in the Route A»D 503a;
Aggregator 201 can encourage End Customer1 to have Receiver1 ship more through the T&L network.

A system and method for configuring an aggregation system across a chain of nodes has been disclosed herein, in which the system includes aggregated sub-chains on a hierarchical mode. The aggregated chain includes the aggregator 201, the service providers, the service consumers, and the end customer. The configuration is such that each entity in the chain gains only if they are loyal to each other on the aggregated chain. Based on the hierarchy, clusters are focused on the service consumers who are provided aggregation points for utilizing the nodes in the aggregated chain. The end customer is also rewarded in proportion to the service consumers' utilization of the aggregated chain. The service providers are measured based on the aggregation points they have contributed to the network. The aggregator 201 benefits from the fact that the nodes in the chain will have higher utilization given the incentive for the service providers, service consumers and the end customer. The system continuously monitors the utilization of the nodes and the service providers, to identify the service providers who have a higher probability of underutilization based on past transaction history and will automatically deallocate them from the hierarchy. The system also provides a visual dashboard that brings together all the entities in a single screen such that the aggregator 201 can identify inefficiencies/ focus areas for improvement. The system of nodes is configured such that it can be used by the aggregator 201 and the end customer to solve specific pain-points in their respective domains.

**Embodiment of implementation**

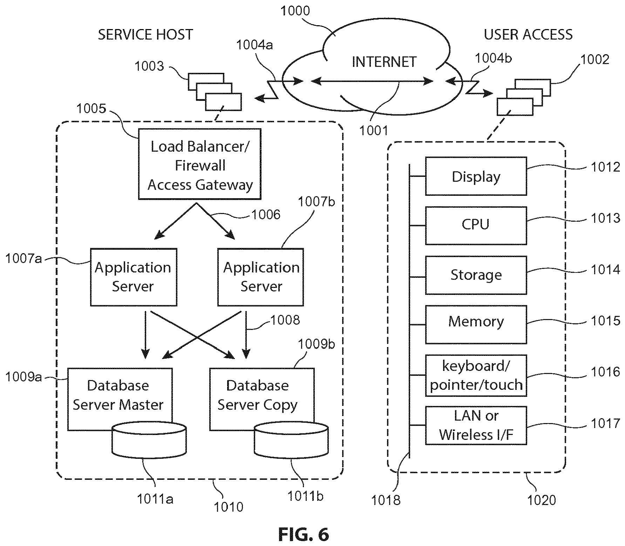

Those skilled in the art will appreciate that computer systems 1010, 1020 depicted in FIG. 6 are merely illustrative and are not intended to limit the scope of embodiments disclosed herein. Any of the aspects disclosed herein can be carried out using any of the components or modules shown in FIG. 6. Various modifications and changes can be made as would be understood by a person skilled in the art having the benefit of this disclosure. The various embodiments described herein are meant to be illustrative and not limiting. Many variations, modifications, additions, and improvements are contemplated. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the exemplary configurations may be implemented as a combined structure or component. These and other variations, modifications, additions, and improvements can fall within the scope of embodiments as defined in the claims that follow.

The Internet 1000, composed of many individual but connected networks, operates on a standard protocol stack characterized by using the standard protocols of TCP over IP to transmit requests and replies including but not limited to higher level protocols using the data payload of TCP delivered messages. The logical connection 1001 can be viewed as a conduit for connecting two or more computing endpoints 1004 across one or more routers, switches, wired and/or wireless circuits as a means of logical attachment between end points.

Service Host devices 1003 are reachable via a communication link 1004a as designated address points in the Internet 1000 using standard routing protocols in the OSI Reference Model. Clients 1002 provide user access via a communication link 1004b to information and features and/or functionality provided by the Server host machines via the network 1001. Server hosts 1003 in the an embodiment are composed of multiple resources arranged to provide redundant, fault-tolerant computing; each such resource within the Host configurations 1010 is understood by those skilled in the art as more powerful, more robust, and in many cases more specialized elements of the standard computer 1020.

The server Host configuration 1010 involves a front end device 1005 to load balance 1006 the request messages across one or more equivalent Applications servers 1007a, 1007b. The front end device 1005 can also include the network connection, security firewall as integrated or separate discrete network elements. The Application server 1007 provides the software container to execute the software logic disclosed herein in order, including without limit the operating systems, application programs, reusable application modules according to defined computer configuration and loaded sequence of computer operation instructions in order to perform the defined service function. Application Servers 1007 access, retrieve, and maintain system database information and contents of aspects of the present disclosure in a logical fashion only; physical storage elements, may be distributed, as depicted in FIG. 10 host configuration 1010 as discrete database servers 1009a, 1009b, connected in a redundant fashion via links 1008 between one or more Database servers 1009 containing storage elements 1011a, 1011b. A given storage element can include all or part of a Server host 1003 data set, but logically one copy of data is accessible as the master or current copy of data values 1009a, and one or more copies can be maintained as active (read-only), stand-by or offline backup copies 1009b. Those skilled in the art understand that the data copies can include application program, configuration and alternate configuration information, which allow system interruptions to be corrected by rerouting the message streams between elements to restore or continue service operation within the server Host 1003 according the server host configurations 1010.

User endpoints 1002 can be any of the readily available commercial products known as desktop, laptop, tablet, or smart phones which server as general purpose computing devices with access to online services 1004 provided by various server hosts 1003 over the Internet 1000.

A user endpoint 1002, as is readily understood by those skilled in the art, is further described in the block view 1020, as follows. Each such user device 1002 is implemented as a computer or computing device 1020 for use as a client 1004b according to an embodiment. Illustrated are at least one processor 1013 coupled to a bus 1018. Also coupled to the bus 1018 are a memory 1015, a storage device 1014, a keyboard and/or pointer and/or touch sensitive surface 1017, and graphics display device 1012 coupled via a standard graphics adapter.

The processor 1013 for laptops and desktops may be any general-purpose processor such as an INTEL or AMD x86 compatible-CPU, including without limit multicore chip sets; the Processor 1013 for mobile phones can be any of the NVIDIA Tegra 3, or Qualcomm Snapdragon S4 SOC (system on a chip). The storage device 1014 is, in an embodiment, a hard disk drive or a solid-state memory device but can also be any other device capable of storing data, such as a writeable compact disk (CD) or DVD. The electronic memory device 1015 can be, for example, firmware, read-only memory (ROM), non-volatile random access memory (NVRAM), and/or RAM or level-II cache, and holds machine-readable instructions and electronic data used by the processor 1013. The user inputs to the computer system 1020 are via the input interfaces 1016 which can be a physical or virtual keyboard via a touch sensitive screen or surface, in combination with mouse, track ball, or other type of pointing device. The Display 1012 presents text, images and other information on the device screen. The network adapter 1017 couples the computer 1020 to the network 1000 over wired or wireless protocol connections 1004b.

As is known in the art, the computing device 1002 and more specifically the operating system executing in CPU 1013 from memory 1015 is adapted to execute computer program modules. As used herein, the term "module" refers to computer program logic and/or data for providing the specified functionality. A module can be implemented in hardware, firmware, and/or software. In one embodiment, the modules are stored on the storage device 1014, loaded into the memory 1015, and executed by the processor 1013.

Application server 1007a of the Server Host Configuration 1010 is also readily understood by those skilled in the art as a variation albeit more powerful, more specialized, and less portable, of said computing device 1002.

It is contemplated that various embodiments of the present disclosure can be implemented using a single instance of User computing device 1002 connected via the Internet 1000 to a single Server host 1003, while in other embodiments multiple such systems, or multiple nodes making up the end to end computer system 1030, can be configured to host different portions or instances of embodiments to deliver the specified software features and functions of the present disclosure.

Additionally, as is well understood to those skilled in the art, the embodiments of the present disclosure can involve server virtualization, whereby a single larger or more powerful machine is subdivided into multiple independent environments or container by executing separate copies of the operating system models for each logical defined instance. Similarly, the state of art for computing may variously use cloud computing technology, whereby costs of provisioning machines is reduced by using shared network resources and software-based configuration to allocate and deallocate computing instances on demand.

**Claims**

1. A computer-implemented method of configuring a one-to-many aggregation system across an aggregated chain of nodes to optimize utilization of resources of an aggregator, the method comprising the steps of:

defining a plurality of interconnected electronic nodes of a route, the route including a source node, a plurality of intermediate nodes, and a destination node, in a network through which tangible assets or human-provided services utilizing tangible assets flow from the source node at a physical source location through the intermediate nodes and to the destination node at a physical or electronic destination location along an aggregated route, each of the nodes including an identity of the destination node and the physical destination location of the destination node, the network including a plurality of provider participants each of which provides a tangible asset or a service via the route on behalf of an aggregator of the one-to-many aggregation system, a plurality of receiver participants each of which receives the tangible asset or the service from a corresponding one of the provider participants, and a destination participant that receives the tangible asset or the service from one of the receiver participants, wherein the network includes the route, the aggregator, the receiver participants, and the destination participant collectively forming a hierarchy, wherein the provider participants and the aggregator are outside of the hierarchy;
allocating to the aggregator a plurality of aggregation points in a pool;
defining aggregation points transfer rules that allow aggregation points to be transferred from the following participants in the one-to-many aggregation system, the rules including:

the aggregator can transfer any number of the aggregation points from the pool to any of the participants in the network, and
any of the provider participants can transfer to any of the receiver participants only some or all of those aggregation points that the corresponding provider participants received from the aggregator;

computing a usage factor associated with each of the provider participants based on (a) a number of points exchanged between the each of the provider participants and respective ones of the receiver participants and (b) a ratio of a number of times the provider participants have served the receiver participants to a total number of opportunities the provider participant had to service the receiver participants in a hierarchy;
responsive to the usage factor associated with an underperforming one of the provider participants falling below a threshold, automatically deallocating the underperforming provider participant from the network such that the underperforming provider participant can no longer receive or exchange points in the pool in the hierarchy, thereby optimizing utilization of resources of the aggregator; and
displaying on a graphical user interface a block board linked to a network layout of the network, the graphical user interface being configured to:

allow selection of any of the nodes in the network, and
portray respective contributions of the provider participants and the receiver participants at a node level for the route so that underperforming ones of the provider participants can be identified, those of the receiver participants with additional capacity to receive additional tangible assets or the service on the network can be identified, and those of the nodes where the network needs to be strengthened can be identified.

2. The computer-implemented method of claim 1, further comprising the step of:
grouping the receiver participants into multiple clusters based on a number of the points accrued by each of the receiver participants in the hierarchy, where each of the clusters defines a mutually distinct range of points that the number of accrued points must fall within.

3. The computer-implemented method of claim 1, further comprising the steps of:

allocating aggregation points by the aggregator to each of the provider participants based on a committed volume of the tangible assets or extent of the services committed to be exchanged between the corresponding provider participant and the receiver participants in the hierarchy;
transferring points possessed by a selected one of the provider participants to a corresponding one of the receiver participants each time the selected provider participant provides one or more of the tangible assets or one or more of the services to the corresponding receiver participant, according to a function that includes the committed volume and node-level optimization factors determined by the aggregator specific to a channel used to service the receiver participants;
allocating aggregation points by the aggregator to the receiver participants according to a function that includes the committed volume and node-level optimization factors determined by the aggregator;
transferring aggregation points by the aggregator to the destination participant based on a percentage of points gained by the receiver participants associated with the hierarchy.

4. The computer-implemented method of claim 3, wherein the node-level optimization factors are based on an extent to which the aggregator wants to incentivize the receiver participants to cause an increase in the committed volume in the aggregated route.

5. The computer-implemented method of claim 3, further comprising the step of:
tracking all transfers of points among any of the participants in an electronic distributed ledger, wherein:

all transfers of points among any of the participants are accessible by the aggregator only,
only those points allocated from the aggregator to each of the provider participants and points transferred by each of the provider participants to any of the receiver participants are accessible by each of the provider participants,
only those points allocated to each of the receiver participants are accessible by the respective ones of the receiver participants, and
only those points allocated to the destination participant and the receiver participants servicing the destination participant are accessible by the destination participant.

6. The computer-implemented method of claim 1, wherein the automatically deallocating the underperforming provider participant from the network includes transferring the points possessed by the underperforming provider participant back to the aggregator.

7. The computer-implemented method of claim 1, wherein the rules further include any of the receiver participants can transfer to the destination participant only some or all of those aggregation points that the corresponding receiver participant received from the aggregator or from any of the provider participants.

8. The computer-implemented method of claim 3, wherein the receiver participant and an end customer can trade the aggregation points gained in the hierarchy for preferential services in the hierarchy.

FIG. 1

200

213

211

End Customer

210

209 — Receiver

Receiver accrues
Aggregate Points from
Provider Participant

208

OUT OF Aggregated Chain

207

IN Aggregated Chain

206

End customer
accrues Aggregate
Points from
Aggregator

Providers

PP A ··· PP Y PP Z

Providers

PP 1 ··· PP n

Receiver accrues
Aggregate Points
from Aggregator

205

Aggregation Points allocation
to Provider Participants

No Aggregation Points

Pool of Aggregation Points

203

204

Aggregation Points allocation
to aggregated chain

Aggregator

202

201

**FIG. 2**

FIG. 3

**FIG.4**

**FIG. 5**

SERVICE HOST

1003

1005

1000

INTERNET

1004a

1004b

1001

USER ACCESS

1002

Load Balancer/
Firewall
Access Gateway

1006

1007a

Application
Server

1007b

Application
Server

1008

1009a

Database
Server Master

1009b

Database
Server Copy

1011a

1010

1011b

Display — 1012

CPU — 1013

Storage — 1014

Memory — 1015

keyboard/
pointer/touch — 1016

LAN or
Wireless I/F — 1017

1018

1020

**FIG. 6**

# Aggregation

## Dashboard

**Overall**

| Aggregation points Gained | Aggregation points Opportunity lost |
|:---:|:---:|
| **8000** | **1500** |

Aggregation points Gained — 701

1200

Trade Points — 702

Aggregation points Opportunity lost

150

703

Shipment details

Utilities

**FIG. 7**

Europäisches
Patentamt

European
Patent Office

Office européen
des brevets

# EUROPEAN SEARCH REPORT

**Application Number**

EP 18 17 0320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/321607 A1 (DUBE PARIJAT [US] ET AL) 3 November 2016 (2016-11-03) * abstract; figures 2-5 * * paragraphs [0050], [0053], [0071] - [0077] * ----- | 1-8 | INV. G06Q10/08 |
| X | US 2004/249699 A1 (LAURENT PIERRE L [US] ET AL) 9 December 2004 (2004-12-09) * figures 2,3,12a * ----- | 1-8 | |
| A | Anonymous: "Distributed ledger - Wikipedia", , 7 January 2017 (2017-01-07), XP055503017, Retrieved from the Internet: URL:https://en.wikipedia.org/w/index.php?title=Distributed_ledger&oldid=758826587 [retrieved on 2018-08-29] * page 1 * ----- | 1-8 | |

**TECHNICAL FIELDS SEARCHED (IPC)**

G06Q

The present search report has been drawn up for all claims

| Place of search | Date of completion of the search | Examiner |
|---|---|---|
| Munich | 29 August 2018 | Flores Sanchez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 17 0320

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2018

| Patent document cited in search report | Publication date | Patent family member(s) | Publication date |
|---|---|---|---|
| US 2016321607 A1 | 03-11-2016 | US 2016321607 A1<br>US 2016321609 A1 | 03-11-2016<br>03-11-2016 |
| US 2004249699 A1 | 09-12-2004 | EP 1606756 A2<br>TW I358677 B<br>US 2004249699 A1<br>US 2004249742 A1<br>US 2004254807 A1<br>US 2011125666 A1<br>US 2014149313 A1<br>WO 2004088473 A2 | 21-12-2005<br>21-02-2012<br>09-12-2004<br>09-12-2004<br>16-12-2004<br>26-05-2011<br>29-05-2014<br>14-10-2004 |

EPO FORM P0459

For more details about this annex : see Official Journal of the European Patent Office, No. 12/82

**EP 3 399 481 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 89692118 A
- US 68108817 A

- IN 201711015483